(19) Europäisches Patentamt
European Patent Office
Office européen des brevets

(11) EP 0 790 150 B1

(12) **EUROPEAN PATENT SPECIFICATION**

(45) Date of publication and mention
of the grant of the patent:
**24.03.2004 Bulletin 2004/13**

(51) Int Cl.⁷: **B60R 21/16**

(21) Application number: **97300950.9**

(22) Date of filing: **14.02.1997**

(54) **Dual air bag Structure with an elastomer inner air bag and a method of forming thereof**

Doppelte Luftsackstruktur mit einem inneren Luftsack aus Elastomer und Verfahren zu ihrer Herstellung

Structure à deux sacs gonflables avec un sac interne en élastomère et procédé de formation d'une telle structure

(84) Designated Contracting States:
**DE GB**

(30) Priority: **14.02.1996 US 11579 P**
**26.06.1996 US 670680**

(43) Date of publication of application:
**20.08.1997 Bulletin 1997/34**

(73) Proprietor: **TAKATA CORPORATION**
**Minato-ku, Tokyo 106 (JP)**

(72) Inventor: **Hirai, Kinji**
**Minato-ku, Tokyo 106 (JP)**

(74) Representative: **Chettle, Adrian John et al**
**Withers & Rogers,**
**Goldings House,**
**2 Hays Lane**
**London SE1 2HW (GB)**

(56) References cited:
**EP-A- 0 496 566          EP-A- 0 670 247**
**DE-A- 4 142 884          US-A- 5 044 663**
**US-A- 5 249 824          US-A- 5 452 914**

• **PATENT ABSTRACTS OF JAPAN vol. 014, no. 110 (M-0943), 28 February 1990 (1990-02-28) & JP 01 311930 A (NIPPON PLAST CO LTD), 15 December 1989 (1989-12-15)**

**Description**

Field of the Invention

The present invention relates to a vehicle air bag structure. In particular, the present invention relates to a vehicle air bag of the "bag-within-a-bag" type air bag structure, wherein an inner bag is disposed within an outer bag. The present invention also relates to a method of forming the inner air bag.

Background of the Invention

An air bag assembly usually comprises an air bag structure housed within a container. The air bag is typically stored in the container in a folded state. The air bag is inflated by a gas or fluid ejected by a gas generator or inflator that is in close proximity to the container.

After a vehicle collison begins, the gas generator is actuated so that an inert, non-toxic gas such as nitrogen is directed into the air bag structure. The gas is fed into the air bag structure through an air bag inlet. Upon inflation of the air bag structure, the container, which is typically mounted in a part of the instrument panel or steering wheel column, is broken and the air bag structure inflates so that the vehicle passenger is protected from injury.

A known type of air bag structure is referred to as a "bag-within-a-bag" structure. This type of structure, typically, comprises an inner bag disposed within an outer bag. The inner bag usually receives gas from the gas generator, and, subsequently, directs the gas into the outer bag so that the outer bag inflates to its necessary configuration to protect the passenger.

Various types of bag-within-a-bag air bag structures have been disclosed in the art. For example, U.S. Patent No. 3,473,824 discloses an inner bag that ruptures so that an outer bag can be filled to protect the occupant of the vehicle during a collision. Because the bag is ruptured at some point during inflation, it is difficult to control the manner in which the outer air bag is expanded.

Another bag-within-a-bag type air bag structure has been disclosed by U.S. Patent 5,249,824. This patent discloses an inner bag of a bag-within-a-bag air bag structure with venting holes in order to control the manner in which the inner bag inflates the outer bag during a vehicle collison. The vent holes direct fluid out of the inner bag in directions which are outward (lateral) from the central axis thereof. Thus, the inner air bag is difficult to manufacture and provides only a single control device.to attempt to control the gas flow into the outer air bag.

Most of the prior art discloses that the inner bag of the "bag-within-a-bag" type dual air bag structure is formed of flexible fabric material, such as nylon. The inner air bag is typically formed of the same nylon material as that of the outer air bag. Although, nylon is typically the material used for an inner air bag in a dual air bag structure, other materials have been disclosed. For example, U.S. Pat. No. 3,900,210 discloses an elastic knitted inner bag. This material absorbs kinetic energy from the fluid or the gas ejected from an inflator; this absorption results in the peak sound reduction. U. S. Pat. No. 3,814,458 discloses fiberglass as the material for the inner air bag. The fiberglass material absorbs heat and kinetic energy from the inflator fluid.

US 5,249,824 (corresponding to the preamble of claim 1) discloses a dual air bag structure wherein vent holes are provided in a rear portion of the inner bag.

Even though the prior art discloses a bag-within-a-bag type air bag structures, the prior art fails to specifically provide an air bag device that is easy to manufacture, that includes an inner bag with a plurality of devices to control the flow of gas from the inner bag to the outer bag during inflation, and, in addition, that includes an inner air bag composed of an elastomer to provide an effective kinetic energy absorption capacity of a dual air bag structure.

Summary of the Invention

one objective of the present invention is to provide an air bag structure of the bag-within-a-bag type, which can be efficiently and economically manufactured in mass production techniques. Another objective of the present invention is to provide an air bag structure capable of controlling the flow of gas between the inner bag and the outer bag of the air bag structure.

These objectives are achieved by providing an air bag for a vehicle, said air bag comprising:

an outer air bag having an internal cavity and an inlet portion;
an inner air bag having an inlet portion, being disposed within said internal cavity, said inner air bag including a first portion, a second portion;
said inlet portion of said outer air bag and said inlet portion of said inner air bag being fastenable to a vehicle structure at a common point; and
at least one device for controlling inflation gas flow from said inner bag to said outer air bag ;

an air-tight seam provided between said first portion and said second portion; and
said at least one inflation gas flow control device comprising at least one vent hole located on the periphery of said first and second portions.

The common point connection forms a common inlet for both the inner bag and the outer bag.

These objectives of the invention can be achieved by providing the inner bag as a monolithic member; that is, the inner bag is formed from one unitary material.

In a preferred embodiment, the inner bag of an air bag structure is comprised of thermoplastic elastomers, preferably urethane. The inner bag may be molded during a manufacturing process so that the inner bag is a single unitary structure, i.e., monolithic. Also, the molded monolithic inner bag is formed with a plurality of vent holes that control the flow of gas from the inner air bag to the outer air bag during inflation of the air bag structure. Another objective of the invention provides an inner air bag that can be efficiently manufactured, while still providing an effective method of controlling the flow of air between the inner bag and the outer bag during a vehicle collision.

An additional objective of the invention is to provide an inner air bag with a supplemental control device, in addition to, or instead of the vent holes of one preferred embodiment. This objective is achieved by providing at least one weakened portion in the material used to form the inner air bag so that the inner air bag punctures at some point during inflation, and, thus, allows rapid flow of gas from the inner air bag to the internal cavity of the outer air bag.

An additional objective of the present invention is to provide a method of forming an air bag. This objective is achieved by molding an inner air bag from thermoplastic materials. Preferably, a thermoplastic elastomer, such as thermoplastic polyurethane, which is suitable to manufacture by injection molding.

A further objective of the present invention is to provide a new dual air bag design with an effective kinetic energy absorption capability. The absorption capacity determines the safety of an occupant who is pitched toward a structural part of the vehicle by the force of a collision.

These objectives of the present invention are achieved by using a combination of materials for the outer bag and the inner bag having an elasticity that enhances the kinetic energy absorption capability of the dual air bag structure. In particular, these objectives of the present invention are achieved by adopting a thermoplastic elastomer for the inner bag. This type of inner air bag with the outer air bag cushions a moving occupant in a vehicle collision more effectively than other materials, especially flexible nylon fabric that is typically used for an inner air bag.

Furthermore, the present invention allows for more efficient manufacturing methods (molding techniques) than the prior art method (sewing) typically used to join the fabric panels of the prior art inner bags, because of the thermo-plasticity of the materials used to form the inner air bag of the present invention. This method of forming an air bag includes providing a first thermoplastic panel and a second thermoplastic panel, and then connecting said first thermoplastic panel to said second thermoplastic panel by a thermoplastic edge. More particularly, the connecting step includes forming a bonded thermoplastic edge between said first thermoplastic panel and said second thermoplastic panel by injection molding.

Further objects and advantages of the present invention will become apparent from the detailed description of preferred embodiments which follow.

Brief Description of the Drawings

The accompanying drawings, which are incorporated in and constitute a part of the specification, illustrate a presently preferred embodiment of the invention, and, together with the general description given above and the detailed description of the preferred embodiments given below, serve to explain the principles of the invention.

Fig. 1 is a sectional view of an air bag assembly incorporating the air bag structure constructed according to the present invention;
Fig. 2 is a schematic view of the air bag assembly of Fig. 1, with the air bag structure inflated to its predetermined configuration;
Fig. 3 shows a rear view of the inner bag of an air bag assembly in a deflated state;
Fig. 4 shows an embodiment of an inner air bag according to the present invention;
Fig. 5 shows a rear view of an inner air bag;
Fig. 6 shows a front view of the inner air bag shown in Fig. 5;
Fig. 7 shows a cross-sectional of the inner air bag view taken along the line 7-7 in Fig. 5; and
Fig. 8 shows the encircled portion of the inner air bag shown in Fig. 7.

Detailed Description of the Preferred Embodiments

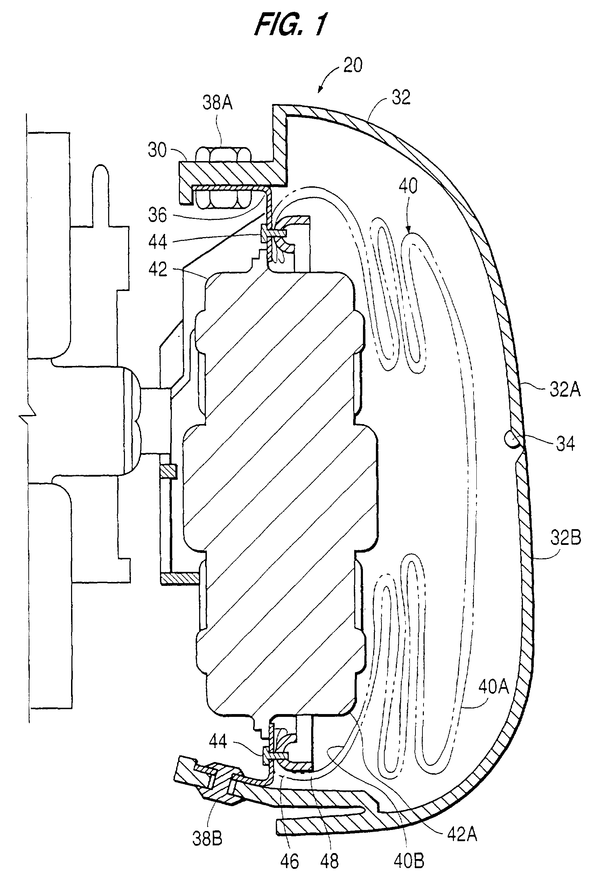

Fig. 1 shows an air bag assembly 20 that incorporates the air bag structure 40 of the present invention. The air bag assembly 20 includes a container 30 that houses the air bag structure 40. The container 30 includes a cover 32 that is fixedly connected to a retainer 36, preferably a plate. The cover 32 is fixedly connected to the retainer 36 by a fastener. The fastener may comprise any type of fastener known to those of skill in the art for fastening two structural members together. For example, the cover 32 and retainer 36 may be connected by a bolt 38A or a rivet 38B shown in Fig. 1. The cover 32 is provided with a groove 34 that creates a weakened segment that allows the cover 32 to break into two portions 32A and 32B during deployment of the air bag structure 40.

A gas generator 42 is provided in the air bag assembly to dispense gas into the air bag structure 40 during a vehicle collision. The gas generator 42 is preferably provided with a gas dispensing section 42A. The gas generator 42 can have various known constructions available in the art, as long as the gas generator provides a gas to the internal space of the air bag structure 40 during a vehicle collison.

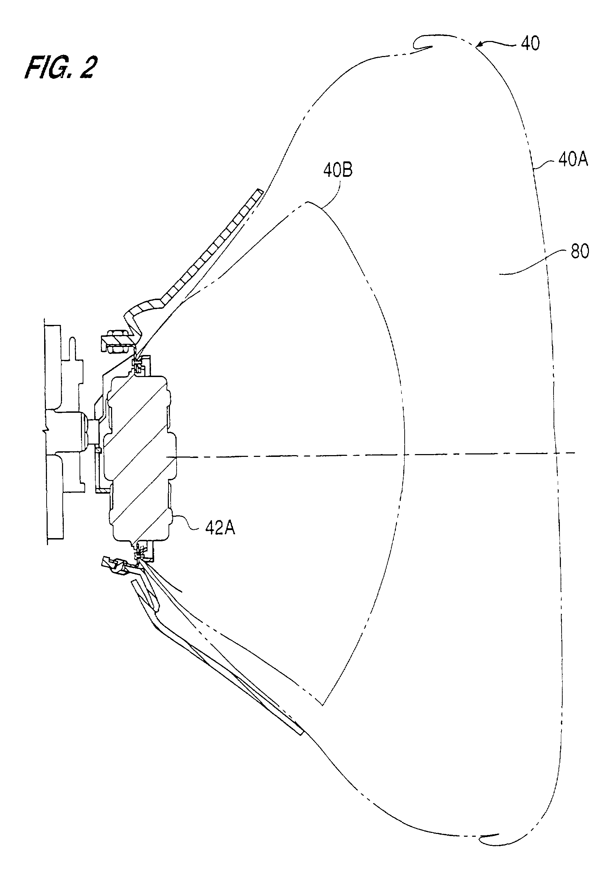

Thus, when a vehicle collision occurs, the gas generator is actuated so that a gas, typically a non-toxic gas such as nitrogen, is discharged from the gas dispensing section 42A. As shown in Fig. 2, the gas emitted from the gas dispensing section 42A fills an inner air bag 40B of the air bag structure 40. The inner air bag 40B expands in an internal cavity 80 of the outer air bag 40A provided in the air bag structure 40.

In order to attach the air bag structure 40 to the air bag assembly 20, each of the air bags is provided with an inlet that is connected to the same point of the air bag assembly 20. For example, as shown in Fig. 1, the outer air bag 40A is provided with an inlet 46, while the inner air bag 40B is provided with an inlet 48. Both of the inlets 46 and 48 of the outer air bag 40A and the inner air bag 40B are connected to the retainer 36 by a plurality of fastening members. As shown in Fig. 1, rivets 44 are used to form this connection. It is to be understood that any suitable connection can be used as long as the connection forms an airtight seal between the retainer 36 and the inlets 46 and 48 of the respective air bags 40A and 40B.

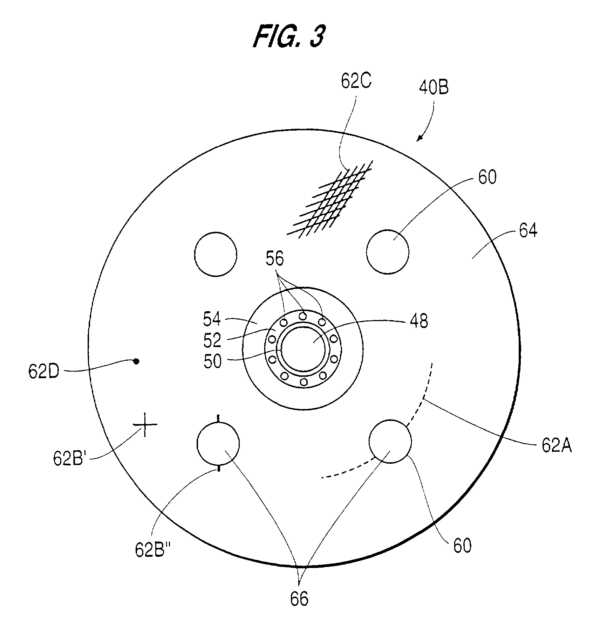

As shown in Fig. 3, the inner air bag 40B is provided with a plurality of mounting holes 56. Although not shown, the outer air bag 40A is also provided with a plurality of mounting holes that correspond to the mounting holes 56 so that the inlets 46 and 48 of the inner air bag 40B and the outer air bag 40A can be attached to the common point of the air bag assembly, i.e., retainer 36.

During inflation of the air bag structure 40, as discussed above, the inner air bag 40B initially receives the gas emitted from the gas dispensing section 42A of the gas generator 42. As the inner air bag 40B inflates, gas is transferred from the inner air bag 40B through a plurality of vent holes 60 formed in a rear portion 64 as shown in Fig. 3. As used in the descriptions of the invention, the term vent hole is defined as a preformed opening in the inner air bag. The vent holes effectively provide a device that controls the flow of gas from the inner air bag 40B to the outer air bag 40A. It is to be understood that the rear portion 64 has a corresponding front portion 66, which portion is partially shown through the vent holes 60 in Fig. 3, so that the air bag forms a monolithic or one-piece member.

The inner air bag 40B of the present invention is preferably formed from a thermoplastic elastomer. Although in the preferred embodiment of the invention a thermoplastic elastomer is employed as the material for the inner air bag 48, any material may be employed so that the inner bag may be molded and formed as a monolithic member. In forming the preferred embodiment of the inner bag injection blow molding or injection molding is used. By using either of these processes, the inner bag 40B is formed without a seam or attaching segment.

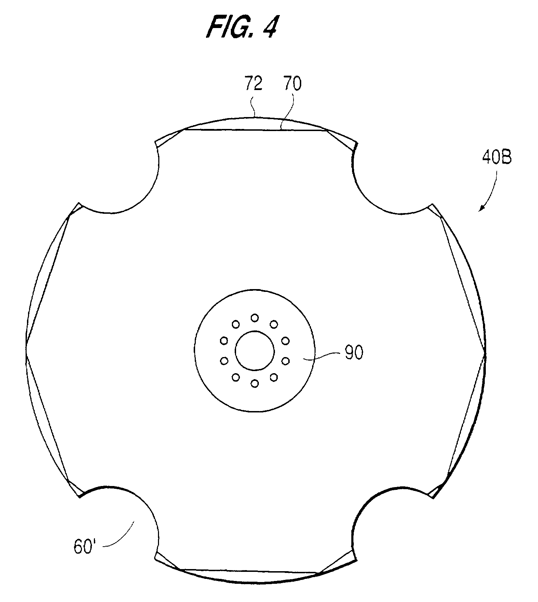

Alternatively, by using a direct blow molding process, the inner air bag is molded with at least one air-tight segment 70 forming an air-tight seam between the rear portion 64 and the front portion 66, as shown in the embodiment of Fig. 4. Reference numeral 72 shows an excess portion of material that has been formed outside the segment during the manufacturing process. This excess material may be discarded. Alternatively, the excess material is left on the air bag to protect the segment 70. As shown in the embodiment of Fig. 4, the inner air bag 40B is provided with a plurality of air-tight segments 70 (ten as illustrated), however, the air bag may be formed with any number of segments. For example, the inner air bag could be formed so a single circular segment is provided. Accordingly, the particular configuration of the segment that forms the boundary of the inner air bag between the first portion 64 and the second portion 66 can be selected so that the inner air bag performs its required function, and also such that the manufacturing process may be carried out in an efficient manner.

As discussed above, the inner air bag 40B is provided with an inlet portion 48. In order to facilitate mounting of the inner air bag 40B with the outer air bag 40A, the inner air bag 40B is provided with various annular strengthened portions. These annular strengthened portions are formed during the molding process by providing the portions with different material thicknesses. The inner air bag is provided with these portions so that the air bag can effectively deliver the gas provided by the gas generator to the outer air bag.

Particularly, the inner annular portion 50 of the inner air bag is provided with the greatest thickness because it is used as part of the support to mount the inlet 48 to the retainer 36 as a reaction member. Moving from the inner annular portion 50 to the intermediate annular portion 52, the thickness of these different areas decreases. As shown in Fig. 3, the intermediate annular portion 52 is provided with the plurality of holes 56. Accordingly, during manufacturing, the thickness of these annular sections is selected so that they can achieve their respective functions. The intermediate annular portion 52 must be molded to a thickness so that the mounting holes 56 will stay intact during inflation of the inner air bag 40B. For example, the intermediate circular portion 52 is provided with a thickness three times the thickness of the remaining rear portion of the inner air bag 40B. Furthermore, an outer annular portion 54 is provided with a thickness in the inlet area 48 to withstand the force and heat exerted on the inner air bag 40B from the gas emitted from the gas dispensing section 42A. The outer annular portion 54 is preferably not as thick as the thickness of the intermediate annular portion 52.

Alternatively, the inner annular portion 50, the intermediate annular portion 52, and the outer annular portion 54 are provided with the same thickness, which is greater than the thickness of the remaining area of the rear portion 64. Accordingly, the inner air bag is provided with one strengthened portion 90 as shown in the embodiment of Fig. 4.

Furthermore, the various thicknesses of the annular portions 50, 52, 54 can be formed by attaching one or more sheets of the same or different material after the molding process.

As discussed above, Fig. 4 shows an embodiment of the monolithic inner air bag 40B of the present invention. Similar to the air bag shown in Fig. 3, the inner air bag of Fig. 4 is preferably formed from a thermoplastic elastomer during a molding process. However, in the embodiment of the air bag shown in Fig. 4, the vent holes 60' are located on the periphery of the two portions used to form the air bag. It is to be understood that the vent holes 60 shown in Fig. 3 could also be arranged in this manner. Accordingly, during inflation of the inner air bag 40B, the vent holes effectively direct the gas in a direction radially outward from the inner air bag 40B into the internal cavity 50 of the outer air bag 40A. In a further modification of this embodiment, vent holes can be provided in both the rear portion 64 and the periphery of the two portions of the inner air bag 40B, so that the inner air bag has vent holes facing in a plurality of directions.

In a further embodiment of the invention, the monolithic inner air bag 40B of Fig. 4 is provided with a supplemental control device for controlling the flow of gas between the inner air bag 40B and the outer air bag 40A during a vehicle collision. This supplemental control device is preferably an intentionally or deliberately weakened portion provided in the material that is used to form the inner air bag 40B. The intentionally weakened portion can be provided in the rear portion 64, the front portion 66, or both. By selecting the location of the intentionally weakened portion, the rate and direction of deployment of the outer air bag 40A can be effectively controlled.

Fig. 3 shows the different examples of embodiments of the weakened portion that can be used singularly or in combination with each other. For example, the weakened portion can comprise a plurality of slots or slits 62A that are scored into the thermoplastic elastomer that the inner air bag is formed from. The slots 62A can be scored through the material, only in the surface of the material, or both. Moreover, the slots 62A can be provided as weakened portions extending from the vent holes 60, formed in the material offset from the vent holes, 60 or both.

Additionally, the weakened portion can comprise a tear or cut. The cut can be a cross shape, as shown by cross-cut 62B' in Fig. 3. Moreover, the tear or cut 62B'' can extend from the vent holes 60. Alternatively, the weakened portion can be formed during the molding process by providing a thinned area of material 62C in the rear panel 64. It is to be understood that the thinned portion can be provided in a plurality of locations in either the rear portion, the front portion, or both. It is preferred that the thinned portion be shaped as a circle or a rectangle; however, any geometric shape is applicable as long as it provides the required weakened portion. A further embodiment of the weakened portion comprises a small pin hole 62D provided in one of the portions that comprise the inner air bag 40B.

By providing an intentionally weakened portion in the air bag portions, the air bag punctures or more particularly ruptures during deployment of the air bag structure 40. Because the exemplary weakened portions discussed above may either be provided individually in the inner air bag or in combination with one another, the weakened portions provide a supplemental control device for the inner air bag. The selection of the particular type of weakened portion is based upon the configuration that the air bag structure is to be employed in and the particular materials used in forming the outer air bag 40A. Accordingly, by providing the inner air bag 40B with both at least one venting hole 60 and at least one weakened portion 62A-D, the inner air bag 40B is provided with a plurality of devices that control the flow of gas from the inner air bag 40B to the outer air bag 40A. Also, the inner air bag 40B may be provided only with a plurality of weakened portions to form the gas flow control devices.

The outer air bag 40A in this preferred embodiment is formed from a common fabric, such as nylon. The outer air bag 40A comprises a front and rear panel that are sewn together in order to form an air tight seal. A system comprising an outer air bag of two separate panel members sewn together and an inner bag of a monolithic member, discussed above, achieves an advantageous air bag structure 40 that provides an effective method of controlling the inflation of the air bag structure. Any particular type of outer air bag may be used with the molded inner air bag 40B of the present invention. An example of an outer air bag that is formed from a front panel that is sewn to a rear panel is shown in U. S. Patent No. 5,249,824.

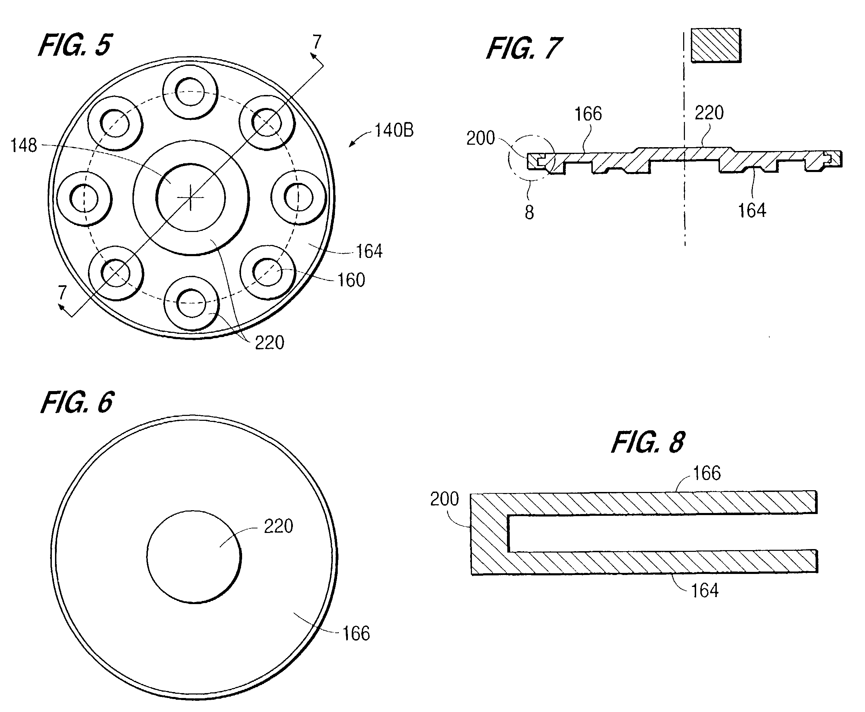

Figs. 5-8 illustrate an inner airbag not falling within the scope of claim 1. As shown in Figs. 5 and 6, the inner bag 140B of this embodiment of the present invention comprises a rear portion or panel 164 and a front portion or panel 166. The panels have vent holes 160 and/or rises 220 (such as raised or thickened portions around the vent holes 160, inlet 148, and in the center of front panel 166), which rises function as a reinforcement for the panels. Although each panel can be shaped from a sheet of material with reinforcements added thereto, each panel should, preferably, be formed by injection molding to reduce material loss and to simplify the manufacturing process.

The inner bag 140B is composed of a thermoplastic elastomer, preferably urethane, although polyester, polyamide, or polyolefin are suitable. The inner air bag can be formed by a various processes, such as: injection molding, blow molding, or heat sealing of sheets. Although each of these manufacturing processes has its owns difficulties, all of them provide an improved manufacturing technique when compared to sewing fabric panels together. For example, after injection molding the inner air bag it is difficult to remove the core mold die from the inner cavity of the formed air bag, while in a blow molding process it is not easy to attain uniform wall thickness of the air bag panels. Heat sealing of the panels used to form the inner air bag will damage and weaken the sheets if this manufacturing method is not carefully undertaken. The disclosed, preferred method for forming the inner air bag of the present invention eliminates theses problems.

As shown in Fig. 7 and 8, the rear 164 and front 166 panels are connected by an edge 200. In the preferred manufacturing process, each of the first panel and the second panel is separately formed by injection molding. Then, the connecting edge 200 is also formed by injection molding such that a bonded portion is formed between the first panel and the second panel. The material for the connecting edge, preferably, should be the same as the front and rear panels so that the injected material (resin) impregnates the edges of each of the panels so that the interface between injected material and the material of each of the panels disappears and appears uniform. It is to be understood that a different material can be used for each of the rear panel, the front panel, and the connecting edge, as long as each of the materials will join with the associated material during the injection molding process.

As discussed above in conjunction with Figs. 1-4, it is to be understood that, although not shown, the inner air bag of Figs. 5-8 is also installed in a dual air bag assembly for a passenger restraint system. When assembled, the dual air bag assembly has an outer bag with an internal cavity, an inlet opening, and vent holes, while the inner bag 140B, which also has an inlet opening 148 and vent holes 160 on a rear panel 164, is disposed within the internal cavity of the outer bag. Rather than having vent hole 160 located in the rear panel or portion 164, the inner air bag is provided with vent holes on its side. That is, according to the invention a portion of the vent hole is located in both the rear and front panels of the inner air bag.

Both outer and inner air bags are fastened together to a structural part around an inflator through their inlet openings. When the inflator is ignited, gas flow is directed into the inner bag, and then the gas flow is directed toward the outer bag through the vent holes of the inner bag to fully inflate the outer air bag.

As discussed above, the prior art discloses other materials besides thermoplastic elastomers as the material of the inner air bag. Prior to the present invention, the importance of the relationship between the material of the inner bag and the kinetic energy absorption capability of the inner bag was not known and not given much attention.

Table 1 shows the effects of the material of the inner bag, where urethane is used as a representative of thermoplastic elastomer material for the inner air bag of the present invention. In the experiment, 40kg of an impact mass was launched toward a fully inflated air bag fixed on a steering wheel. The air bag received the impact mass and, therefore, the kinetic energy of the impact mass was absorbed by the air bag. The following results were obtained:

TABLE 1

| Model No. | Material of the Inner Bag | | Impact Mass Velocity km/h | Energy Absorption N °m |
|---|---|---|---|---|
| 149 | urethane | | 35.4 | 1846 |
| 150 | urethane | | 35.5 | 1836 |
| | | Average | $\overline{35.5}$ | $\overline{1841}$ |
| 166 | nylon fabric | | 35.3 | 1826 |
| 167 | nylon fabric | | 35.2 | 1812 |
| | | Average | $\overline{35.3}$ | $\overline{1819}$ |
| 184 | no inner bag | | 35.4 | 1834 |
| 190 | no inner bag | | 35.2 | 1839 |
| | | Average | $\overline{35.3}$ | $\overline{1837}$ |

These tests were conducted with three types of air bags; each having the same nylon outer air bag. As shown from Table 1, the dual air bag with the urethane inner bag of the present invention absorbed much more energy than the dual air bag with the nylon fabric inner bag. Table 1 also shows that the kinetic energy absorbed by the dual air bag with the urethane inner bag is comparable to that of an air bag with tethers and no inner air bag, while the nylon fabric inner bag has limited contribution to this performance.

**Claims**

1. An air bag for a vehicle, said air bag comprising:

   an outer air bag (40A) having an internal cavity and an inlet portion (46);
   an inner air bag (40B) having an inlet portion (48), being disposed within said internal cavity, said inner air bag (40B) including a first portion (64), a second portion (66);
   said inlet portion (46) of said outer air bag (40A) and said inlet portion (48) of said inner air bag (40B) being fastenable to a vehicle structure at a common point; and
   at least one device for controlling inflation gas flow from said inner bag (40B) to said outer air bag (40A);
   an air-tight seam provided between said first portion and said second portion;

   **characterised in that** said at least one inflation gas flow control device comprises at least one vent hole (60) located on the periphery of said first and second portions (64, 66).

2. The air bag recited in claim 1, wherein said inner air bag (40B) is formed from a thermoplastic elastomer.

3. The air bag recited in claim 2, wherein the thermoplastic elastomer is selected from the group including: urethane, polyester, polyamide, and polyolefin.

4. The air bag recited in claim 2 or claim 3, wherein said air-tight seam is a thermoplastic bond.

5. The air bag recited in claim 2 or claim 3, wherein the inner air bag (40B) is a molded unitary material.

6. The air bag recited in any preceding claim, wherein said at least one inflation gas flow control device comprises four vent holes (60).

7. The air bag recited in any preceding claim, further comprising at least one supplemental control device provided in at least one of said first portion (64) and said second portion (66).

8. The air bag recited in claim 7, wherein said at least one supplemental control device comprises at least one element selected from the group consisting of a weakened portion and a vent hole (60).

9. The air bag recited in claim 8, wherein the weakened portion is at least one of the following structural features provided in a material of said inner air bag: slots (62A). tears (62B"), cuts, cross-cuts (62B'), thinned material section (62C) and pin hole (62D).

10. The air bag recited in any preceding claim, further comprising:

    at least one strengthened portion adjacent said inlet portion (48) of said inner air bag (40B).

11. The air bag recited in claim 10, wherein the inner air bag is provided with three annular strengthened portions (50, 52, 54), each with a different strength level, adjacent said inlet portion (48) of said inner bag (40B).

12. The air bag recited in claim 11, wherein one of said strengthened portions surrounds a plurality of mounting holes (56).

13. A method of forming an air bag, said method comprising:

    molding a first thermoplastic panel and a second thermoplastic panel; connecting said first thermoplastic panel to said second thermoplastic panel by a thermoplastic edge to generally define an inner cavity;
    providing at least one inflation gas flow control device at the periphery of said first and second panels; and
    disposing said first and second thermoplastic panels connected by said thermoplastic edge in an outer air bag;

    wherein said inflation gas flow control device directs a gas flow from said inner cavity for inflating said outer air bag.

14. The method of claim 13, further comprising the step of providing said first thermoplastic panel, said second thermoplastic panel, and said thermoplastic edge with the same thermoplastic material.

15. The method of claim 14, wherein the step of connecting includes bonding said thermoplastic edge to said first and said second thermoplastic panels by injection molding.

16. The method of claim 14, wherein said inflation gas flow control device comprises a vent hole (60).

**Patentansprüche**

1. Luftsack für ein Fahrzeug, umfassend:

   einen äußeren Luftsack (40A) mit einem inneren Hohlraum und einem Einlaßabschnitt (46);

   einen inneren Luftsack (40B) mit einem Einlaßabschnitt (48), der in dem inneren Hohlraum angeordnet ist, wobei der innere Luftsack (40B) einen ersten Abschnitt (64), einen zweiten Abschnitt (66) beinhaltet;

   wobei der Einlaßabschnitt (46) des äußeren Luftsacks (40A) und der Einlaßabschnitt (48) des inneren Luftsacks (40B) an einer Fahrzeugstruktur an einem gemeinsamen Punkt befestigbar sind; und

   zumindest eine Vorrichtung zum Steuern eines Gasstroms zum Aufblasen aus dem inneren Sack (40B) zum äußeren Sack (40B);

   eine luftdichte Naht, die zwischen dem ersten Abschnitt und dem zweiten Abschnitt vorgesehen ist;

   **dadurch gekennzeichnet, daß** die zumindest eine Vorrichtung zum Steuern des Gasstroms zum Aufblasen zumindest ein Luftloch (60) umfaßt, das am Umfang des ersten und zweiten Abschnitts (64, 66) angeordnet ist.

2. Luftsack nach Anspruch 1, wobei der innere Luftsack (40B) aus einem thermoplastischen Elastomer gebildet ist.

3. Luftsack nach Anspruch 2, wobei das thermoplastische Elastomer aus der Gruppe ausgewählt ist, die Urethan, Polyester, Polyamid und Polyolefin beinhaltet.

4. Luftsack nach einem der Ansprüche 2 oder 3, wobei die luftdichte Naht eine thermoplastische Bindung ist.

5. Luftsack nach einem der Ansprüche 2 oder 3, wobei der innere Luftsack (40B) ein geformtes Einheitsmaterial ist.

6. Luftsack nach einem der vorhergehenden Ansprüche, wobei die zumindest eine Vorrichtung zum Steuern des Gasstroms zum Aufblasen vier Luftlöcher (60) umfaßt.

7. Luftsack nach einem der vorhergehenden Ansprüche, ferner umfassend zumindest eine ergänzende Steuervorrichtung, die in zumindest einem des ersten Abschnitts (64) und des zweiten Abschnitts (66) vorgesehen ist.

8. Luftsack nach Anspruch 7, wobei die zumindest eine ergänzende Steuervorrichtung zumindest ein Element umfaßt, das aus der Gruppe ausgewählt ist, die aus einem geschwächten Abschnitt und einem Luftloch (60) besteht.

9. Luftsack nach Anspruch 8, wobei der geschwächte Abschnitt zumindest eines der folgenden Strukturmerkmale ist, die in einem Material des inneren Luftsacks vorgesehen sind: Schlitze (62A), Risse (62B"), Kreuzschnitte (62B'), ausgedünnter Materialabschnitt (62C) und Stiftloch (62D).

10. Luftsack nach einem der vorhergehenden Abschnitte, ferner umfassend:

    zumindest einen verstärkten Abschnitt, der dem Einlaßabschnitt (48) des inneren Luftsacks (40B) benachbart ist.

11. Luftsack nach Anspruch 10, wobei der innere Luftsack mit drei ringförmigen verstärkten Abschnitten (50, 52, 54), jeweils mit einer unterschiedlichen Stärkeebene, versehen ist, die dem Einlaßabschnitt (48) des inneren Sacks (40B) benachbart sind.

**12.** Luftsack nach Anspruch 11, wobei einer der verstärkten Abschnitte mehrere Befestigungslöcher (56) umgibt.

**13.** Verfahren zum Bilden eines Luftsacks, umfassend:

Formen einer ersten thermoplastischen Bahn und einer zweiten thermoplastischen Bahn;

Verbinden der ersten thermoplastischen Bahn mit der zweiten thermoplastischen Bahn über eine thermoplastische Kante zum allgemeinen Definieren eines inneren Hohlraums;

Vorsehen von zumindest einer Vorrichtung zum Steuern des Gasstroms zum Aufblasen am Umfang der ersten und zweiten Bahn; und

Anordnen der ersten und zweiten thermoplastischen Bahn, die über die thermoplastische Kante verbunden sind, in einem äußeren Luftsack;

wobei die Vorrichtung zum Steuern des Gasstroms zum Aufblasen einen Gasstrom aus dem inneren Hohlraum zum Aufblasen des äußeren Luftsacks leitet.

**14.** Verfahren nach Anspruch 13, ferner umfassend den Schritt, die erste thermoplastische Bahn, die zweite thermoplastische Bahn und die thermoplastische Kante mit demselben thermoplastischen Material zu versehen.

**15.** Verfahren nach Anspruch 14, wobei der Schritt des Verbindens das Binden der thermoplastischen Kante an der ersten und zweiten thermoplastischen Bahn durch Spritzgießen beinhaltet.

**16.** Verfahren nach Anspruch 14, wobei die Vorrichtung zum Steuern des Gasstroms zum Aufblasen ein Luftloch (60) umfaßt.

## Revendications

**1.** Sac gonflable pour véhicule, ledit sac gonflable comprenant:

un sac gonflable extérieur (40A) comprenant une cavité interne et une portion d'entrée (46);
un sac gonflable intérieur (40B) comprenant une portion d'entrée (48) et disposé à l'intérieur de ladite cavité interne, ledit sac gonflable intérieur (40B) comprenant une première portion (64) et une deuxième portion (66);
ladite portion d'entrée (46) dudit sac gonflable extérieur (40A) et ladite portion d'entrée (48) dudit sac gonflable intérieur (40B) pouvant être attachées à une structure de véhicule en un point commun; et
au moins un dispositif pour commander un écoulement d'un gaz de gonflage à partir dudit sac gonflable intérieur (40B) vers ledit sac gonflable extérieur (40A);
une couture étanche à l'air prévue entre ladite première portion et ladite deuxième portion;

**caractérisé en ce que** ledit au moins un dispositif pour commander un écoulement de gaz de gonflage comporte au moins un orifice de sortie de gaz (60) situé sur la périphérie desdites première et deuxième portions (64, 66).

**2.** Sac gonflable selon la revendication 1, dans lequel ledit sac gonflable intérieur (40B) est constitué d'un élastomère thermoplastique.

**3.** Sac gonflable selon la revendication 2, dans lequel l'élastomère thermoplastique est sélectionné parmi le groupe compose de l'uréthane, du polyester, du polyamide et des polyoléfines.

**4.** Sac gonflable selon la revendication 2 ou la revendication 3, dans lequel ladite couture étanche à l'air est un joint thermoplastique.

**5.** Sac gonflable selon la revendication 2 ou la revendication 3, dans lequel le sac gonflable intérieur (40B) est une matière unitaire moulée.

**6.** Sac gonflable selon l'une quelconque des revendications précédentes, dans lequel ledit au moins un dispositif pour commander un écoulement de gaz de gonflage comporte quatre orifices de sortie de gaz (60).

7. Sac gonflable selon l'une quelconque des revendications précédentes, comprenant en outre au moins un dispositif de commande supplémentaire prévu dans au moins une parmi ladite première portion (64) et ladite deuxième portion (66).

8. Sac gonflable selon la revendication 7, dans lequel ledit au moins un dispositif de commande supplémentaire comprend au moins un élément sélectionné parmi le groupe composé d'une portion affaiblie et d'un orifice de sortie de gaz (60).

9. Sac gonflable selon la revendication 8, dans lequel la portion affaiblie est au moins une des caractéristiques structurelles suivantes prévue dans une matière dudit sac gonflable intérieur: des fentes (62A), des déchirures (62B"), des coupures, des entailles (62B'), une section de matière amincie (62C) et une piqûre (62D).

10. Sac gonflable selon l'une quelconque des revendications précédentes, comprenant en outre:

au moins une portion renforcée à proximité de ladite portion d'entrée (48) dudit sac gonflable intérieur (40B).

11. Sac gonflable selon la revendication 10, dans lequel le sac gonflable intérieur est pourvu de trois portions renforcées annulaires (50, 52, 54), chacune de celles-ci présentant un niveau de renforcement différent, à proximité de ladite portion d'entrée (48) dudit sac gonflable intérieur (40B).

12. Sac gonflable selon la revendication 11, dans lequel une desdites portions renforcées entoure une pluralité de trous de montage (56).

13. Procédé de formation d'un sac gonflable, ledit procédé comprenant:

le moulage d'un premier panneau thermoplastique et d'un deuxième panneau thermoplastique:

la connexion dudit premier panneau thermoplastique audit deuxième panneau thermoplastique par un bord thermoplastique de façon à définir d'une manière générale une cavité intérieure;
la fourniture d'au moins un dispositif pour commander un écoulement de gaz de gonflage à la périphérie desdits premier et deuxième panneaux thermoplastiques; et
la disposition desdits premier et deuxième panneaux thermoplastiques connectés par ledit bord thermoplastique en un sac gonflable extérieur;

dans lequel ledit dispositif pour commander un écoulement de gaz de gonflage dirige un écoulement de gaz à partir de ladite cavité intérieure en vue de gonfler ledit sac gonflable extérieur.

14. Procédé selon la revendication 13, comprenant en outre l'étape consistant à pourvoir ledit premier panneau thermoplastique, ledit deuxième panneau thermoplastique et ledit bord thermoplastique de la même matière thermoplastique.

15. Procédé selon la revendication 14, dans lequel l'étape de connexion comprend la jonction du bord thermoplastique auxdits premier et deuxième panneaux thermoplastiques via un moulage par injection.

16. Procédé selon la revendication 14, dans lequel ledit dispositif pour commander un écoulement de gaz de gonflage comporte un orifice de sortie de gaz (60).

## FIG. 1

FIG. 2

## FIG. 3

## FIG. 4

FIG. 5

FIG. 7

FIG. 6

FIG. 8